# EUROPÄISCHE PATENTSCHRIFT

(11) **EP 1 563 781 B1**
(45) Veröffentlichungstag und Bekanntmachung des Hinweises auf die Patenterteilung: **26.07.2006**
(21) Anmeldenummer: 04029528.9
(22) Anmeldetag: 14.12.2004
(51) Int. Cl.: A47J 45/07

(54) **Gefäss mit einem am Gefäss lösbar befestigbaren Griffkörper**
Vessel with detachable handle
Conteneur avec poigné détachable

(30) Priorität: 17.02.2004 DE 102004007890
(43) Veröffentlichungstag der Anmeldung: 17.08.2005
(73) Patentinhaber: HEINRICH BAUMGARTEN KG SPEZIALFABRIK FÜR BESCHLAGTEILE, 57290 Neunkirchen (DE)
(72) Erfinder: Baumgarten, Rolf-Günter, 57290 Neunkirchen-Wiederstein (DE)
(74) Vertreter: von den Steinen, Axel

(56) Entgegenhaltungen:
- US-A- 4 577 367

## Beschreibung

Die Erfindung betrifft ein Gefäß mit einem am Gefäß lösbar befestigbaren Griffkörper nach dem Oberbegriff des Anspruchs 1.

Gattungsgemäße Gefäße werden üblicherweise als Kochgeschirr verwendet und weisen einen lösbar befestigbaren Griffkörper auf, so dass der Griffkörper wahlweise vom Gefäß abgenommen werden kann. Dies ist insbesondere dann wünschenswert, wenn das Gefäß insgesamt von außen erhitzt werden soll. Denn durch das Abnehmen des Griffkörpers wird die Erhitzung des Griffs vermieden, so dass das Gefäß zu einem späteren Zeitpunkt durch Befestigung des Griffkörpers am Gefäß wieder gehandhabt werden kann. Zur Übertragung der mechanischen Kräfte zwischen Gefäß und Griffkörper wird der Griffkörper auf ein Halteelement am Gefäß aufgesteckt und mit einem Verriegelungsmechanismus verriegelt.

Aus der US 4,577,367 ist ein solches Gefäß mit abnehmbarem Griffkörper bekannt. Zur Verriegelung des Griffkörpers am Halteelement des Gefäßes beschreibt diese Druckschrift einen Verriegelungsmechanismus mit Kniehebelgestänge. Durch Betätigung eines Handgriffs kann das Kniehebelgestänge über seinen Todpunkt gedrückt werden, so dass ein mit dem Kniehebelgestänge verbundenes Riegelelement in seiner verriegelten Stellung fixiert ist.

Nachteilig an dem bekannten Verriegelungsmechanismus mit Kniehebelgestänge ist es, dass das Kniehebelgestänge bauartbedingt im Bereich seines Todpunktes einen sprunghaften Anstieg der Schließkräfte verursacht. Ein sicherer Halt des Griffkörpers am Gefäß ist deshalb nur dann gewährleistet, wenn die Bauteile des Verriegelungsmechanismus, insbesondere das Riegelelement und das mit dem Riegelelement formschlüssig und/oder kraftschlüssig in Eingriff zu bringende Halteelement außerordentlich exakt gearbeitet sind. Bei Überschreitung der eng tolerierten Maßtoleranzen lässt sich der Verriegelungsmechanismus entweder überhaupt nicht mehr verriegeln (Übermaß) oder es ist auch nach Verriegelung des Verriegelungsmechanismus ein unerwünschtes Spiel vorhanden (Untermaß). Im Ergebnis müssen deshalb die Bauteile der bekannten Verriegelungsmechanismen mit Kniehebelgestänge außerordentlich exakt gefertigt werden, um eine zuverlässige Verriegelung gewährleisten zu können.

Ausgehend von diesem Stand der Technik ist es deshalb Aufgabe der vorliegenden Erfindung ein neues Gefäß mit abnehmbaren Griffkörper vorzuschlagen, bei dem der Verriegelungsmechanismus eine zuverlässige Befestigung des Griffkörpers ermöglicht.

Diese Aufgabe wird durch ein Gefäß nach der Lehre des Anspruchs 1 gelöst.

Vorteilhafte Ausführungsformen der Erfindung sind Gegenstand der Unteransprüche.

Die Erfindung beruht auf dem Grundgedanken, dass das Kniehebelgestänge elastisch federnd im Griffkörper gelagert wird. Durch die elastisch federnde Lagerung des Kniehebelgestänges wird erreicht, dass bei Verriegelung des Riegelmechanismus und der damit verbundenen Überschreitung des Todpunktes des Kniehebelgestänges eine zumindest geringfügige elastische Verformung im Kniehebelgestänge möglich ist. Diese elastische Verformung führt dazu, dass es bei der Verriegelung zu einem Kraftanstieg mit abgeflachter Kraftkurve kommt, wobei zugleich erheblich größere Maßtoleranzen ausgeglichen werden können.

Ein weiteres Problem gattungsgemäßer Gefäße ist es, dass diese während ihres bestimmungsgemäßen Gebrauchs innerhalb eines breiten Temperaturbands eingesetzt werden. Aufgrund der thermischen Ausdehnung der verschiedenen Bauteile kommt es dazu, dass sich die Maßtoleranzen abhängig von der jeweils aktuellen Einsatztemperatur ändern. Um eine zuverlässige Befestigung des Griffkörpers im gesamten Temperaturband zu gewährleisten, ist es deshalb besonders vorteilhaft, wenn das Kniehebelgestänge zumindest geringfügig in Richtung der Längsachse der Ausnehmung im Griffkörper axial verschiebbar ist. Durch die axiale Beweglichkeit des Kniehebelgestänges gepaart mit der elastischen Federung im Griffkörper können temperaturbedingte Maßänderungen ohne Weiteres ausgeglichen werden. Weiter wird dadurch die Dauerbelastbarkeit und die Verschleißfestigkeit verbessert, was zu besonders langlebigen Produkten führt.

Um eine leichtgängige Betätigung des Kniehebelgestänges zu gewährleisten, sollte im Griffkörper ein Führungselement vorhanden sein, das das Kniehebelgestänge in Richtung der Längsachse der Ausnehmung führt. Im Ergebnis wird dadurch gewährleistet, dass das Kniehebelgestänge nicht zur Seite hin ausweichen kann, sondern immer exakt in Richtung der Längsachse bewegt wird.

In welcher Weise die elastische Federung des Kniehebelgestänges im Griffkörper konstruktiv gelöst wird, ist grundsätzlich beliebig. Nach einer alternativen Ausführungsform ist das Kniehebelgestänge auf einem im Griffkörper axial verschiebbar und elastisch federnd gelagerten Schlitten befestigt. Bei Betätigung des Verriegelungsmechanismus kann das Kniehebelgestänge dann zusammen mit dem Schlitten axial im Griffkörper verschoben werden, wobei sich zwischen den Federkräften am Schlitten und den im Kniehebelgestänge übertragenen Schließkräften ein Kräftegleichgewicht ausbildet.

Alternativ zur ersten Ausführungsform kann das erfindungsgemäße Prinzip auch dadurch realisiert werden, dass die am Griffkörper gelagerten Hebel des Kniehebelgestänges jeweils auf federelastischen Schwenkachsen gelagert sind. Bei Betätigung des Verriegelungsmechanismus können sich die Schwenkachsen elastisch verformen, so dass die Umlenkpunkte der am Griffkörper gelagerten Hebel des Kniehebelgestänges sich entsprechend verschieben.

Um eine möglichst weite Durchbiegung der federelastischen Schwenkachsen erreichen zu können, ist es besonders vorteilhaft, wenn die Hebel des Kniehebelgestänges im Bereich zwischen den Enden der Schwenkachsen, insbesondere mittig, gelagert sind.

Weiterhin vorteilhaft ist es, wenn die Enden der Schwenkachsen in ihrer Lagerung am Griffkörper gelenkig abgestützt werden, so dass sich die Schwenkachsen entlang eines durchgehenden Biegeradius verformen können.

Soweit die seitliche Führung des Kniehebelgestänges in einen Bereich hineinreicht, der von den federelastischen Schwenkachsen der Hebel des Kniehebelgestänges durchgriffen werden muss, können im Führungselement Ausnehmungen vorgesehen sein, deren Durchmesser größer als der Durchmesser der Schwenkachsen ist. Entsprechend diesem Spiel zwischen dem Durchmesser der Schwenkachsen und dem Durchmesser der Ausnehmungen können sich die Schwenkachsen dann relativ zum Führungselement durchbiegen.

Aus welchem Material die Schwenkachsen hergestellt sind, ist grundsätzlich beliebig. Besonders geeignet ist Federstahl, da dieses Material eine reversible Verformung mit einer Vielzahl von Lastspielen erlaubt. Um noch größere Maßtoleranzen zwischen dem Halteelement am Gefäß und dem Verriegelungsmechanismus am Griffkörper ausgleichen zu können, ist es besonders vorteilhaft, wenn das Riegelelement mit einer unter einem Neigungswinkel zur Längsachse der Ausnehmung im Griffkörper verlaufenden Funktionsfläche am Halteelement zum Eingriff kommt. Aufgrund dieser Neigung der Funktionsfläche können Verschiebungen des Riegelelements längs der Längsachse der Ausnehmung ausgeglichen werden, ohne dass das Verriegeln des Verriegelungsmechanismus unmöglich gemacht wird.

Um die erforderliche Teileanzahl zu verringern, kann ein Hebel des Kniehebelgestänges und das Betätigungselement starr, insbesondere einstückig, miteinander verbunden sein.

Der Griffkörper ist vorzugsweise aus einem Kunststoffgriff und einem darin befestigten Metallkäfig zusammengesetzt, wobei der Metallkäfig vorzugsweise der Lagerung des Verriegelungsmechanismus dient.

Eine Ausführungsform der Erfindung ist in den Zeichnungen schematisch dargestellt und wird nachfolgend beispielhaft erläutert.

Es zeigen:
- **Fig. 1**: ein Gefäß mit abgenommenem Griffkörper im Querschnitt;
- **Fig. 2**: den Verriegelungsmechanismus des Griffkörpers gemäß **Fig. 1** im Schnitt entlang der Schnittlinie I - I;
- **Fig. 3**: den Verriegelungsmechanismus gemäß **Fig. 2** im Schnitt entlang der Schnittlinie II - II;
- **Fig. 4**: das Gefäß gemäß **Fig. 1** mit daran befestigtren Griffkörper;
- **Fig. 5**: den Verriegelungsmechanismus des Griffkörpers gemäß **Fig. 4** im Schnitt entlang der Schnittlinie III - III;
- **Fig. 6**: den Verriegelungsmechanismus gemäß **Fig. 5** im Schnitt entlang der Schnittlinie IV -IV.

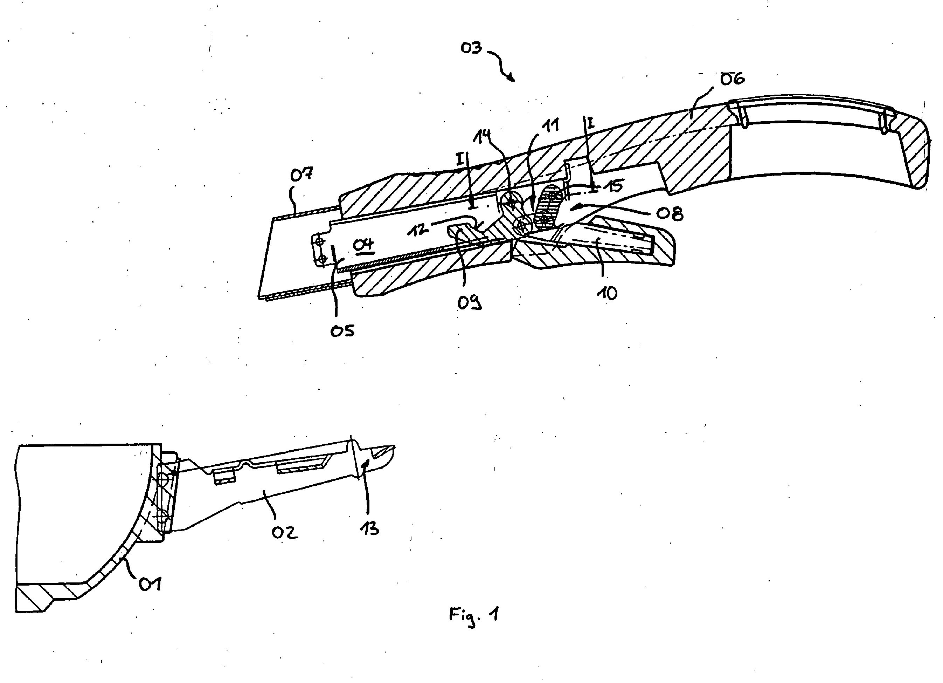

In **Fig. 1** ist ein Gefäß 01, das in der Art einer Bratpfanne ausgebildet ist, mit einem daran befestigtem Halteelement 02 im Querschnitt dargestellt. Zur Handhabung des Gefäßes 01 ist ein Griffkörper 03 vorgesehen, der im in **Fig. 1** dargestellten Zustand vom Gefäß 01 abgenommen ist. Am Griffkörper 03 ist eine Ausnehmung 04 vorgesehen, in die das Halteelement 02 bei Befestigung des Griffkörpers 03 am Gefäß 01 formschlüssig eingesteckt wird.

Der Griffkörper 03 ist in der Art eines Pfannenstiels ausgebildet und wird aus einem Metallkäfig 05 und einem Kunststoffgriff 06 zusammengesetzt. Zur Einhaltung eines ausreichenden Abstands zwischen der heißen Wandung des Gefäßes 01 und dem Kunststoffgriff 06 ist am vorderen Ende des Griffkörpers 03 eine Metallhülse 07 befestigt.

Zur Fixierung des Griffkörpers 03 am Halteelement 02 ist ein Verriegelungsmechanismus 08 vorgesehen. Der Verriegelungsmechanismus 08 besteht aus einem Riegelelement 09, einem Betätigungselement 10 und einem die Stellbewegung des Betätigungselements 10 auf das Riegelelement 09 übertragenden Kniehebelgestänge 11.

Das Riegelelement 09 kommt bei Verriegelung des Verriegelungsmechanismus 08 mit einer schräg verlaufenden Funktionsfläche 12 an einer Kante einer Ausklinkung 13 am Halteelement 02 zum Eingriff. Ein Hebel des Kniehebelgestänges 11 ist einstückig mit dem Betätigungselement 10 verbunden.

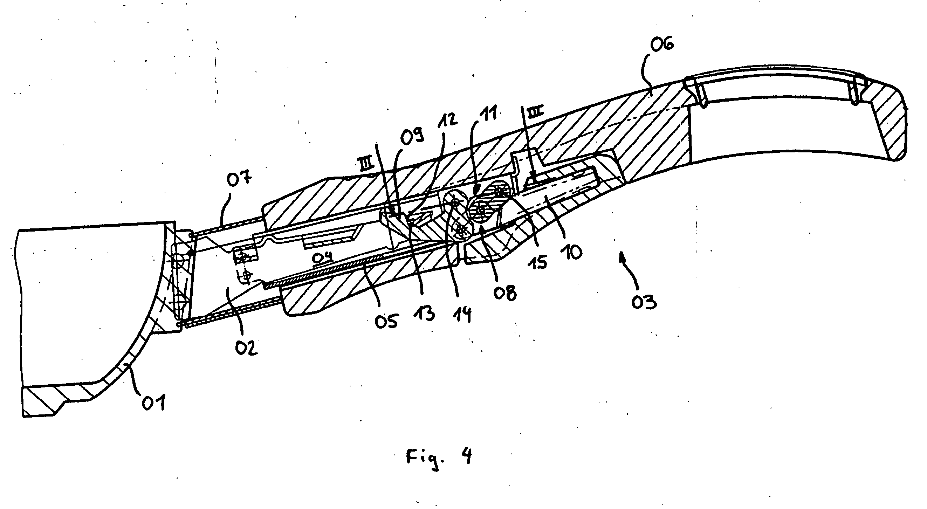

In **Fig. 4** ist der Griffkörper 03 nach Anordnung am Halteelement 02 des Gefäßes 01 und anschließender Verriegelung des Verriegelungsmechanismus 08 im Schnitt dargestellt. Man erkennt, dass das Kniehebelgestänge 11 durch Betätigung des Betätigungselements 10 über seinen Todpunkt gedrückt und damit verriegelt ist. Durch die Verstellung des Kniehebelgestänges 11 wird das Riegelelement 09 in die Ausklinkung 13 gedrückt und verhindert auf diese Weise ein Abziehen des Griffkörpers 03 vom Halteelement 02.

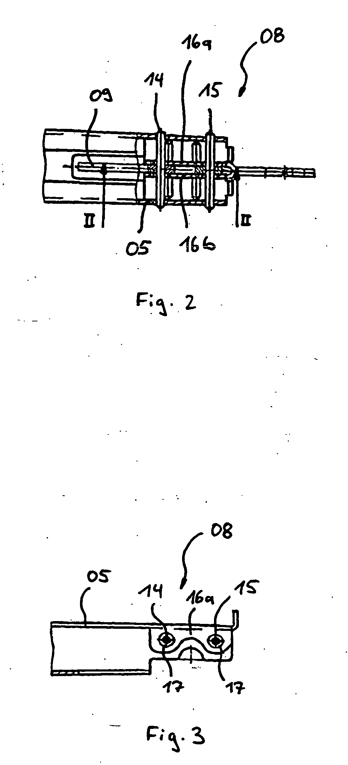

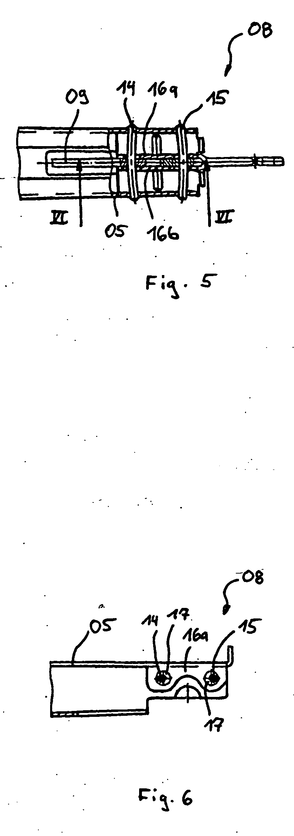

In **Fig. 2** und **Fig. 5** ist der Verriegelungsmechanismus 08 jeweils im Schnitt entlang der Schnittlinien I - I bzw. III - III dargestellt. In der Schnittebene erkennt man zwei Achsen 14 und 15, mit denen das Kniehebelgestänge 11 am Metallkäfig 05 gelagert ist. Die Achsen 14 und 15 sind aus einem federelastischen Material, beispielsweise Federstahl, hergestellt und können sich somit bei Aufbringung einer entsprechenden Belastung federelastisch durchbiegen.

Bei dem in **Fig. 2** dargestellten entspannten Zustand des Kniehebelgestänges 11 erstrecken sich die Achsen 14 und 15 gradlinig zwischen den Lagerpunkten am Metallkäfig 05, in denen die Enden der Achsen 14 und 15 winkelgelenkig gelagert sind.

Sobald, wie in **Fig. 5** dargestellt, das Kniehebelgestänge 11 aufgrund der Verriegelung des Verriegelungsmechanismus 08 gespannt wird, biegen sich die Achsen 14 und 15 federelastisch durch, so dass bei Anlage des Riegelelements 09 in der Ausklinkung 13 ein kontinuierlicher Kraftanstieg mit relativ geringem Steigungskoeffizienten erreicht wird.

Die Hebel des Kniehebelgestänges 11 sind in Richtung der Längsachse der Ausnehmung 04 in einer seitlichen Führung 16, die aus zwei nach unten gebogenen Laschen 16a und 16b gebildet ist, geführt. Die Achsen 14 und 15 durchgreifen die Führungslaschen 16a und 16b in Ausnehmungen 17, deren Durchmesser größer als der Durchmesser der Achsen 14 und 15 ist. Dies ermöglicht, wie insbesondere aus **Fig. 6** ersichtlich, dass sich die Achsen 14 und 15 beim Verspannen des Kniehebelgestänges 11 ausreichend nach außen durchbiegen können.

## Patentansprüche

1. Gefäß (01) mit einem am Gefäß (01) lösbar befestigten und abnehmbaren Griffkörper (03), wobei an der Außenseite des Gefäßes (01) ein Halteelement (02) angeordnet ist, und wobei im Griffkörper (03) eine Ausnehmung (04) vorgesehen ist, in die das Halteelement (02) formschlüssig eingesteckt werden kann, und wobei am Griffkörper (03) ein Verriegelungsmechanismus (08) vorgesehen ist, mit einem Riegelelement (09), das formschlüssig und/oder kraftschlüssig am Halteelement (02) zum Eingriff bringbar ist, mit einem von Hand betätigbaren Betätigungselement (10), mit dem der Verriegelungsmechanismus (08) verriegelt und geöffnet werden kann, und mit zumindest einem Kniehebelgestänge (11), mit dem die Stellbewegung des Betätigungselements (10) auf das Riegelelement (09) übertragbar ist,
**dadurch gekennzeichnet,**
**dass** das Kniehebelgestänge (11) elastisch federnd im Griffkörper (03) gelagert ist, so dass es bei der Verriegelung zu einem Kraftanstieg mit abgeflachter Kraftkurve kommt.

2. Gefäß nach Anspruch 1,
**dadurch gekennzeichnet,**
**dass** das Kniehebelgestänge (11) zumindest geringfügig in Richtung der Längsachse der Ausnehmung (04) axial verschiebbar im Griffkörper (03) gelagert ist.

3. Gefäß nach Anspruch 1 oder 2,
**dadurch gekennzeichnet,**
**dass** das Kniehebelgestänge (11) in Richtung der Längsachse der Ausnehmung (04) im Griffkörper (03) an zumindest einem Führungselement (16) geführt ist.

4. Gefäß nach einem der Ansprüche 1 bis 3,
**dadurch gekennzeichnet,**
**dass** das Kniehebelgestänge auf einem im Griffkörper axial verschiebbar und elastisch federnd gelagerten Schlitten angeordnet ist.

5. Gefäß nach einem der Ansprüche 1 bis 3,
**dadurch gekennzeichnet,**
**dass** zumindest ein Hebel des Kniehebelgestänges (11), insbesondere die am Griffkörper (03) schwenkbar gelagerten Hebel des Kniehebelgestänges (11), auf einer federelastischen Schwenkachse (14, 15) gelagert ist.

6. Gefäß nach Anspruch 5,
**dadurch gekennzeichnet,**
**dass** der Hebel des Kniehebelgestänges (11) im Bereich zwischen den Enden der Schwenkachse (14, 15), insbesondere mittig, gelagert ist.

7. Gefäß nach Anspruch 6,
**dadurch gekennzeichnet,**
**dass** sich die Enden der Schwenkachsen (14, 15) in ihrer Lagerung am Griffkörper (03) gelenkig abstützen.

8. Gefäß nach einem der Ansprüche 1 bis 7,
**dadurch gekennzeichnet,**
**dass** die Schwenkachsen (14, 15) aus Federstahl hergestellt sind.

9. Gefäß nach einem der Ansprüche 1 bis 8,
**dadurch gekennzeichnet,**
**dass** das Führungselement (16) zur seitlichen Führung des Kniehebelgestänges (11) Ausnehmungen (17) aufweist, die von den federelastischen Schwenkachsen (14, 15) durchgriffen werden, wobei der Durchmesser der Ausnehmungen (17) größer als der Durchmesser der Schwenkachsen (14, 15) ist.

10. Gefäß nach einem der Ansprüche 1 bis 9,
**dadurch gekennzeichnet,**
**dass** das Riegelelement (09) bei verriegeltem Verriegelungsmechanismus (08) mit einer unter einem Neigungswinkel zur Längsachse der Ausnehmung (04) im Griffkörper (03) verlaufenden Funktionsfläche (12) am Halteelement (02) zum Eingriff kommt.

11. Gefäß nach einem der Ansprüche 1 bis 10,
**dadurch gekennzeichnet,**
**dass** ein Hebel des Kniehebelgestänges (11) und das Betätigungselement (10) starr, insbesondere einstückig, miteinander verbunden sind.

12. Gefäß nach einem der Ansprüche 1 bis 11,
**dadurch gekennzeichnet,**
**dass** der Griffkörper (03) aus einem Kunststoffgriff (06) und einem darin befestigten Metallkäfig (05) zusammengesetzt ist.

13. Gefäß nach Anspruch 12,
**dadurch gekennzeichnet,**
**dass** der Verriegelungsmechanismus (08) am Metallkäfig (05) gelagert ist.

14. Gefäß nach einem der Ansprüche 1 bis 13,
**dadurch gekennzeichnet,**
**dass** der Griffkörper (03) in der Art eines Stiels, insbesondere in der Art eines Pfannenstiels, ausgebildet ist.

15. Griffkörper mit Verriegelungsmechanismus,
**dadurch gekennzeichnet,**
**dass** Griffkörper und Verriegelungsmechanismus zur Bildung eines Gefäßes nach einem der Ansprüche 1 bis 14 geeignet sind.

## Claims

1. A vessel (01) having a handle body (03), which is removably attached to and detachable from the vessel (01), a holding element (02) being positioned on the outside of the vessel (01), and a recess (04) being provided in the handle body (03), into which the holding element (02) may be inserted in a formfitting way, and a locking mechanism (08) being provided on the handle (03), having a lock element (09), which may be engaged in a formfitting and/or frictional way on the holding element (02), having an activation element (10) which may be manually activated, using which the locking mechanism (08) may be locked and opened, and having at least one toggle linkage (11), using which the actuating movement of the activation element (10) may be transmitted to the lock element (09),
**characterized in that** the toggle linkage (11) is mounted in an elastically springy way in the handle body (03) in such way that during the locking, a force increase with flattened force curve occurs.

2. The vessel according to Claim 1,
**characterized in that** the toggle linkage (11) is mounted so it is at least slightly axially displaceable in the handle body (03) in the direction of the longitudinal axis of the recess (04).

3. The vessel according to Claim 1 or 2,
**characterized in that** the toggle linkage (11) is guided on at least one guide element (16) in the direction of the longitudinal axis of the recess (04) in the handle body (03).

4. The vessel according to one of Claims 1 through 3,
**characterized in that** the toggle linkage is positioned on a slide which is axially displaceable in the handle body and is mounted in an elastically springy way.

5. The vessel according to one of Claims 1 through 3,
**characterized in that** at least one lever of the toggle linkage (11), particularly the lever of the toggle linkage (11) mounted pivotably on the handle body (03), is mounted on an elastic pivot axis (14, 15).

6. The vessel according to Claim 5,
**characterized in that** the lever of the toggle linkage (11) is mounted in the area between the ends of the pivot axis (14, 15), particularly centrally.

7. The vessel according to Claim 6,
**characterized in that** the ends of the pivot axes (14, 15) are supported in an articulated mounting on the handle body (03).

8. The vessel according to one of Claims 1 through 7,
**characterized in that** the pivot axes (14, 15) are manufactured from spring steel.

9. The vessel according to one of Claims 1 through 8,
**characterized in that** the guide element (16) has recesses (17) for the lateral guiding of the toggle linkage (11), which are penetrated by the elastic pivot axes (14, 15), the diameter of the recesses (17) being greater than the diameter of the pivot axes (14, 15).

10. The vessel according to one of Claims 1 through 9,
**characterized in that** the lock element (09) engages on the holding element (02) with a function surface (12) running at an angle of inclination to the longitudinal axis of the recess (04) in the handle body (03) when the locking mechanism (08) is locked.

11. The vessel according to one of Claims 1 through 10,
**characterized in that** the lever of the toggle linkage (11) and the activation element (10) are connected to one another rigidly, particularly in one piece.

12. The vessel according to one of Claims 1 through 11,
**characterized in that** the handle body (03) is composed of a plastic handle (06) and a metal cage (05) attached therein.

13. The vessel according to Claim 12,
**characterized in that** the locking mechanism (08) is mounted on the metal cage (05).

14. The vessel according to one of Claims 1 through 13,
**characterized in that** the handle body (03) is implemented like a handle, particularly like a panhandle.

15. A handle body having a locking mechanism,
**characterized in that** the handle body and locking mechanism are suitable for forming a vessel according to one of Claims 1 through 14.

## Revendications

1. Récipient (01) comprenant un corps de poignée (03) fixé au récipient (01) de façon détachable et pouvant être enlevé, un élément de fixation (02) étant prévu sur le côté extérieur du récipient (01), et un évidement (04) étant prévu dans le corps de poignée (03), évidement dans lequel l'élément de fixation (02) peut être inséré en formant une liaison par complémentarité de forme, et étant prévu sur le corps de poignée (03) un mécanisme de verrouillage (08) qui comprend un élément de verrou (09) qui peut être mis en prise avec l'élément de fixation (02) par complémentarité de forme et/ou par action de force, un élément d'actionnement qui peut être actionné à la main et au moyen duquel le mécanisme de verrouillage (08) peut être verrouillé et ouvert, et au moins un mécanisme à leviers articulés (11) au moyen duquel le mouvement de commande de l'élément d'actionnement (10) peut être transmis à l'élément de verrou (09),
**caractérisé**
**en ce que** le mécanisme à leviers articulés (11) est monté élastiquement, faisant ressort, dans le corps de poignée (03), de sorte que, lors du verrouillage, il se produit une augmentation de la force selon une courbe de force à faible pente.

2. Récipient selon la revendication 1,
**caractérisé**
**en ce que** le mécanisme à leviers articulés (11) est monté mobile en translation axiale dans le corps de poignée (03), au moins sur une petite distance selon la direction de l'axe longitudinal de l'évidement (04).

3. Récipient selon la revendication 1 ou 2,
**caractérisé**
**en ce que** le mécanisme à leviers articulés (11) est guidé dans le corps de poignée (03) selon la direction de l'axe longitudinal de l'évidement (04), le long d'au moins un élément de guidage (16).

4. Récipient selon une des revendications 1 à 3,
**caractérisé**
**en ce que** le mécanisme à leviers articulés est disposé sur un chariot mobile en translation axiale dans le corps de poignée et monté élastiquement en faisant ressort.

5. Récipient selon une des revendications 1 à 3,
**caractérisé**
**en ce qu'**au moins un levier du mécanisme à leviers articulés (11), en particulier le levier du mécanisme à leviers articulés (11) qui est monté pivotant sur le corps de poignée (03), est monté sur un axe de pivotement (14, 15) élastique à la façon d'un ressort.

6. Récipient selon la revendication 5,
**caractérisé**
**en ce que** le levier du mécanisme à leviers articulés (11) est monté dans la région comprise entre les extrémités de l'axe de pivotement (14, 15), en particulier au milieu.

7. Récipient selon la revendication 6,
**caractérisé**
**en ce que** les extrémités des axes de pivotement (14, 15) s'appuient de façon articulée dans leur montage sur le corps de poignée (03).

8. Récipient selon une des revendications 1 à 7,
**caractérisé**
**en ce que** les axes de pivotement (14, 15) sont fabriqués en acier à ressorts.

9. Récipient selon une des revendications 1 à 8,
**caractérisé**
**en ce que**, pour le guidage latéral du mécanisme à leviers articulés (11), l'élément de guidage (16) présente des évidements (17) qui sont traversés par les axes de pivotement élastiques à la façon de ressorts (14, 15), le diamètre des évidements (17) étant plus grand que le diamètre des axes de pivotement (14, 15).

10. Récipient selon une des revendications 1 à 9,
**caractérisé**
**en ce que**, lorsque le mécanisme de verrouillage (8) est verrouillé, l'élément de verrou (09) entre en prise avec une surface de fonction (12) portée par l'élément de fixation (02) et qui s'étend dans le corps de poignée (03) en formant un angle d'inclinaison par rapport à l'axe longitudinal de l'évidement (04).

11. Récipient selon une des revendications 1 à 10,
**caractérisé**
**en ce qu'**un levier du mécanisme à leviers articulés (11) et l'élément d'actionnement (10) sont reliés rigidement l'un à l'autre, et sont en particulier en une seule pièce.

12. Récipient selon une des revendications 1 à 11,
**caractérisé**
**en ce que** le corps de poignée (03) est composé d'une poignée en matière plastique (06) et d'une cage métallique (05) fixée à cette poignée.

13. Récipient selon la revendication 12,
**caractérisé**
**en ce que** le mécanisme de verrouillage (08) est monté sur la cage métallique (05).

14. Récipient selon une des revendications 1 à 13,
**caractérisé**
**en ce que** le corps de poignée (03) est réalisé à la façon d'une queue, en particulier à la façon d'une queue de poêle.

15. Corps de poignée possédant un mécanisme de verrouillage,
**caractérisé**
**en ce que** le corps de poignée et le mécanisme de verrouillage sont appropriés pour former un récipient selon une des revendications 1 à 14.
